# EUROPEAN PATENT APPLICATION

(11) **EP 4 603 741 A1**
(43) Date of publication of application: **20.08.2025**
(21) Application number: 24157577.8
(22) Date of filing: 14.02.2024
(51) Int. Cl.: F17C 1/06

(54) **ARTIFICIAL AIR STORAGE FOR COMPRESSED AIR ENERGY STORAGE**

(71) Applicant: Siemens Energy Global GmbH & Co. KG, 81739 München (DE); Amiblu Technology AS, 3241 Sandefjord (NO)
(72) Inventor: Nicke, Frank, 02625 Bautzen (DE); Döhring, Jörg, 02827 Görlitz (DE); Budi, Robert, 02826 Görlitz (DE); Huber, Stefan, 02826 Görlitz (DE); Guminski, Marek, 40748 Katowice (PL); Palsson, Gudmundur, 3213 Sandefjord (NO)
(74) Representative: Roth, Thomas

(57) **Abstract**

The present invention relates to a CAES system with an air storage assembly formed by one or more pipes, each being a tubular element made from advanced composite material. These materials may include carbon fiber or glass fiber, offering superior strength, resistance to environmental stress, and greater storage capacity due to the possibility of larger diameters for the storage element. The air storage assembly can be advantageously designed as a closed loop, typically in a ring or donut shape, which simplifies the overall structure and reduces the complexity and costs associated with managing high pressure. The proposed advantageous design also allows for more flexible installation and efficient use of space, making the system adaptable to various environmental and geographical conditions.

## Description

### FIELD OF INVENTION

The present invention relates to an artificial air storage for use in a compressed air energy storage (CAES) solution, more precisely to a ring-form artificial air storage based on glass/carbon fiber (such as composite) to be use in an CAES (for instance adiabatic CAES).

### BACKGROUND

In the field of Compressed Air Energy Storage (CAES) systems, a critical aspect that dictates the efficiency and durability of the storage solution is the configuration and material of the air storage containers. Traditionally, these systems have employed tubes arranged in a grid parallel form, a design choice that, while common, presents several inherent challenges. The parallel arrangement of tubes necessitates a complex network of endcap and concrete parts to maintain structural integrity and ensure withstanding the huge pressure at the extremities of the tubes when storing the compressed air. This escalates construction and maintenance complexity and costs.

Furthermore, the traditional design often requires a significant amount of space, posing limitations in locations where land availability is scarce or expensive. The spatial constraints and the rigid structural design of the grid parallel form impede the adaptability of CAES systems to various geographical and infrastructural settings. This rigidity limits the widespread applicability of CAES technologies, confining them to areas where such an arrangement can be accommodated without exorbitant costs or logistical challenges.

In addition to the structural challenges posed by the grid parallel form, the choice of material for these tubes significantly impacts the overall performance of CAES systems. Steel has been the predominant material in the construction of compressed air storage containers, owing to its initial affordability and mechanical strength. However, steel tubes are prone to a multitude of issues, for instance corrosion or costs. When buried underground or exposed to harsh environmental conditions, steel reacts with moisture and other elements, leading to corrosion that compromises the integrity of the storage system. This degradation can necessitate frequent inspections, repairs, and replacements, thereby increasing the long-term operational costs and environmental impact. Moreover, steel's susceptibility to temperature variations presents another challenge. The expansion and contraction of steel in response to temperature changes can lead to structural weaknesses and potential failure points. This sensitivity not only raises safety concerns but also imposes additional design and maintenance requirements to mitigate temperature-related impacts. Furthermore, and more importantly, the use of steel in the context of tube for storing compressed air with very high pressure creates a constraint in terms of diameter of the tube that can be used, thus limiting further the volume of compressed air stored for a certain surface of the installation.

The invention described in this patent application addresses these issues by introducing an innovative air storage design and material choice. By moving away from the traditional grid parallel form and steel construction, this invention offers a more efficient, durable, and space friendly solution for CAES systems.

### SUMMARY

This invention introduces an innovative design in the field of Compressed Air Energy Storage systems, centered around a structure that employs one or more rings, as opposed to the traditional grid parallel form of storage tubes. This ring-form structure significantly simplifies the overall design and reduces the complexity associated with managing huge pressure at the extremities in conventional systems. The circular configuration also offers flexibility in terms of installation and spatial requirements. This design allows for a more efficient use of space and can be adapted to a variety of environmental and geographical conditions, broadening the applicability of CAES systems.

In addition to the innovative structural design, this invention proposes the use of advanced composite materials, specifically glass and carbon fiber, in the construction of the storage rings. These materials offer a superior strength-to-weight ratio compared to traditional steel, significantly enhancing the system's resistance to environmental stressors such as corrosion and temperature fluctuations. Furthermore, these materials allow design of tube having larger diameters and consequently, larger storage capacity.

Embodiments provide a Compressed Air Energy Storage, CAES, system comprising: an air storage assembly formed by one or more pipes for storing compressed air, each being a tubular element comprising a composite material.

In an embodiment, the CAES system comprises an air compression and release control mechanism.

In an embodiment, the CAES system comprises at least two pipes joint together, and the tubular elements are modular.

In an embodiment, the composite material include carbon fiber and/or glass fiber and a resin matrix, which can be a thermoset polymer matrix of polyester or epoxy.

In an embodiment the fibers of the composite material are aligned in the circumferential direction of the tubular element.

In an embodiment, the diameter of the tubular element is greater than 3,5 meters.

In an embodiment, the tubular elements are joined with one or more angularly deflected joints with a deflection angle.

In an embodiment, the air storage assembly has the form of a substantially closed loop or closed circuit, wherein the substantially closed loop or closed circuit can have substantially the shape of a ring, a donut, an oval or a race trail. In addition, the air storage assembly having the form of a substantially closed loop may comprise a plurality of concentric substantially closed loops.

In an embodiment, the air storage assembly is buried in the ground.

In an embodiment, the CAES system an adiabatic CAES system.

The details of one or more embodiments are set forth in the accompanying drawings and the description below. Other features will be apparent from the description and drawings, and from the claims.

### BRIEF DESCRIPTION OF THE DRAWINGS

Fig. 1 is a schematic view of a grid structure for the storage according to prior art.
Fig. 2 is a schematic view of a ring structure for the storage according to an embodiment of the invention.
Fig. 3 is a schematic view of a tube section for the storage according to an embodiment of the invention.

### DETAILED DESCRIPTION OF THE EMBODIMENTS

Hereinafter, the embodiments will now be described in detail with reference to the accompanying drawings. However, the disclosure cannot be limited to the embodiment in which the idea of the disclosure is presented, and another embodiment included within range of idea of another backward disclosure, or the present disclosure may be easily proposed by addition, change, deletion and the like of another element.

The terms used in this specification were selected to include current, widely used general terms. In certain cases, a term may be one that was arbitrarily established by the applicant. In such cases, the meaning of the term will be defined in the relevant portion of the detailed description. As such, the terms used in the specification are not to be defined simply by the name of the terms but are to be defined based on the meanings of the terms as well as the overall description of the present disclosure.

Hereinafter, embodiments of the present invention will be described in detail with reference to the accompanying drawings. It should be noted that the same reference numerals are used to designate the same or similar elements throughout the drawings.

Renewable energies are being developed worldwide at an unprecedented rate. This surge is largely driven by the will to reduce carbon emissions. Solar, wind, hydroelectric, and geothermal energies are the cornerstones of this renewable revolution. Unlike traditional fossil fuels, these renewable sources allegedly offer the promise of an inexhaustible supply of energy with significantly reduced environmental footprints. Countries across the globe are investing heavily in these technologies.

For instance, solar energy can be harnessed through photovoltaic cells, converting sunlight directly into electricity. Similarly, wind energy can be generated through turbines that convert kinetic wind energy into electricity. Finally, hydroelectric power uses flowing water to generate energy. These sources, individually and collectively, have the potential to significantly reduce our dependence on fossil fuels.

However, the integration of some renewable energies sources into existing energy grids presents significant challenges, primarily due to their intermittent and unpredictable nature. Solar and wind energies, in particular, are highly dependent on weather conditions and time of day or of the year. Solar panels, for example, can only generate electricity when the sun is shining, and their output is affected by factors such as cloud cover and the angle of the sun. Wind turbines require wind to operate, and their efficiency is contingent upon wind speed and consistency. This variability can lead to mismatches between energy supply and demand. For instance, solar energy generation peaks during the day, which may not align with peak electricity demand periods, particularly in the evenings.

This intermittency issue is not just a daily challenge but also seasonal. In many regions, solar and wind resources vary significantly between seasons, affecting the reliability of these energy sources. For instance, some areas may experience less sunlight during the winter months or reduced wind speeds during certain times of the year. This seasonal variability further complicates the integration of renewables into the energy grid, as it requires planning for periods of both surplus and deficit.

One solution to this challenge lies in energy storage technologies, which allow for the excess energy produced during times of high renewable output to be stored and then used during periods of low production or high demand. Energy storage has therefore become critical in ensuring a consistent and reliable energy supply when relying on producing energy from renewable sources.

One of the most common forms of energy storage is battery technology, particularly lithium-ion batteries. These batteries are increasingly used in both residential and commercial renewable energy installations. They store excess energy generated during peak production times, such as midday for solar power, and make it available for use during periods of low production, like nighttime. This not only helps in smoothing out the supply of electricity but also in reducing reliance on traditional backup power sources, such as fossil fuel-powered generators. However, using batteries for energy storage comes with several downsides. Firstly, the high initial cost is a significant barrier as the investment required for battery storage systems, particularly for large-scale applications, can be substantial. Secondly, there are environmental concerns associated with battery production and disposal. The extraction of raw materials like lithium and cobalt, necessary for battery manufacture, often involves significant energy consumption and can lead to environmental degradation. Furthermore, the recycling and disposal of used batteries remain challenging, raising concerns about the long-term environmental impact. Lastly, batteries have a limited lifespan, characterized by a finite number of charge-discharge cycles. Over time, their efficiency and capacity diminish, necessitating eventual replacement, which adds to the overall cost and resource usage associated with battery storage.

Another option is the pumped hydroelectric storage, especially for large-scale applications. It involves pumping water to a higher elevation during periods of excess energy production and then releasing it to flow back down through turbines to generate electricity when needed. This method is particularly effective for storing large quantities of energy over longer durations and can help balance supply and demand on a grid-wide scale. However, it requires suitable geographic conditions and significant infrastructure investment.

A very promising approach is the Adiabatic Compressed Air Energy Storage (CAES) which represents a significant advancement in the field of energy storage, particularly for managing the intermittency of renewable energy sources. This technology addresses a key challenge in the energy sector: how to effectively store large amounts of energy in a manner that is both efficient and environmentally sustainable.

In traditional CAES systems, electricity, often generated from renewable sources during times of low demand or high production, is used to compress air. This compressed air can be stored in underground reservoirs, such as caverns or depleted natural gas fields. When the demand for electricity rises, this compressed air is released, heated (typically by burning natural gas), and used to drive turbines to generate electricity. A major inefficiency in this process is the loss of heat during the air compression stage, which the adiabatic CAES system seeks to rectify.

The advantage of adiabatic CAES lies in its ability to capture and store the heat produced during the compression of air. In the adiabatic process, as the air is compressed using surplus electricity, it heats up significantly. Instead of allowing this heat to dissipate, the adiabatic system captures it using a thermal energy storage system, typically involving materials with high heat retention capacities like water or molten salts.

Once this heat is stored, it can be later reused during the discharge cycle. When there is a demand for electricity, the compressed air is released from storage. However, unlike traditional CAES, where natural gas is often used to reheat the air, the adiabatic system utilizes the stored thermal energy. This pre-heated air is then used to power a turbine, generating electricity. This process offers several advantages. Firstly, the overall energy efficiency of the system is significantly improved. By capturing and reusing the heat from the compression stage, adiabatic CAES reduces the need for additional energy inputs during the discharge phase. This leads to more electricity generation per unit of stored air, enhancing the system's effectiveness as an energy storage solution. Furthermore, adiabatic CAES is more environmentally friendly compared to conventional CAES systems. By eliminating or greatly reducing the need for fossil fuels to reheat the air, it decreases greenhouse gas emissions associated with electricity generation during peak demand times. This attribute aligns well with the global shift towards more sustainable and renewable energy sources.

Moreover, adiabatic CAES systems are not as geographically constrained as some other forms of energy storage, such as pumped hydroelectric storage. While they do require appropriate underground formations for air storage, these are more widely available than the specific topographical features necessary for pumped hydro storage. In terms of scalability, adiabatic CAES offers flexibility. The technology can be scaled up to accommodate the storage needs of larger energy grids, making it a viable option for widespread adoption in various geographical and industrial contexts.

However, despite these advantages, the development and implementation of adiabatic CAES technology face certain challenges. One significant challenge is the cost associated with developing and building these systems, particularly the costs and space needed for building and installing the storage part, which needs to be capable of storing large quantity of compressed air over numerous cycles. In other words, there are challenges to face in terms of managing a sufficient size for storage and providing structures capable of withstanding huge pressions, which are critical for ensuring the viability on a large scale of this technology.

Traditionally, the storage structures used in this type of CAES system are made from pipes and joints, which can be uniaxial or biaxial. Uni-axial joints do not transfer the axial thrust from one section of the pipe to the next and, as a result, the pipe is not reinforced to receive such a load. Biaxial joints, on the other hand, are designed to take all the pressure from one section of pipe to the next, and the pipe is reinforced to take the load. Nevertheless, biaxial systems tend to be much more expensive than uniaxial pipes and joints.

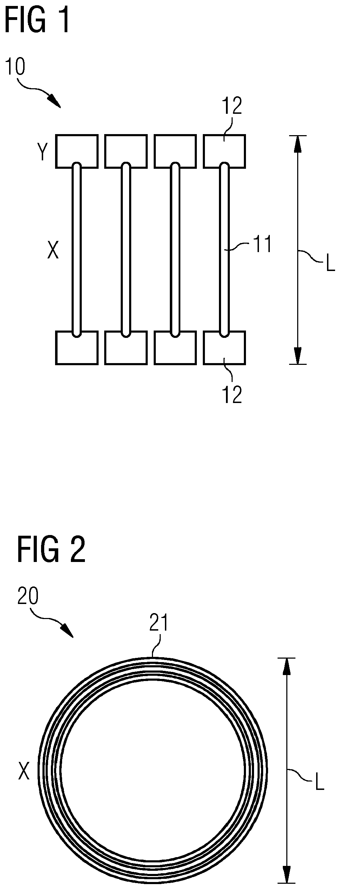

Traditionally, storage tank systems consist of pipe segments joined together and connected in the form of a grid having the shape of a structure with parallel sections as illustrated in Fig. 1. This figure shows a storage tank system 10 having X joined pipe segments 11 which have a length L and are aligned parallel to each other in the form of a grid. In the example shown in Fig. 1, there are four joined pipe segments. Each of these segments may itself consist of one or more pipe sections joined together in an axial direction. Given the pressures exerted on the ends of such tank sections 11, it is necessary to reinforce or restrain the ends with reinforced/restrained end caps. In view of the high pressures involved in a compressed air storage system required in a CAES installation, Y concrete blocks 12 which are concrete thrust blocks and can be formed around the end caps of each of the joined pipe segments 11. These heavy concrete blocks provide a counterforce to the pressure exerted on the end caps of the joined pipe segments 11. These concrete blocks 11 add a certain complexity to the structure, especially as the interface between the pipe material and the concrete has to be managed. Their use in a buried/underground storage system is a considerable source of additional cost, but also of underground volume that is not directly used to store compressed air in the vicinity of the installation. Understandably, these storage structures are not optimal in that the immense pressures resulting at the ends of the joined pipe segments necessitate heavy, costly fittings, reducing the volume actually used for storage underground.

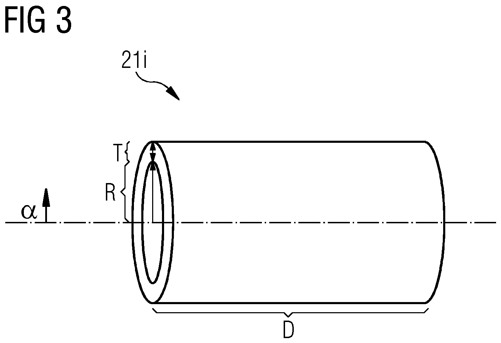

A solution proposed by the present invention consists in arranging the structure of the joined pipe segments or air storage assembly 20 comprising pipe 21 in such a way as to virtually eliminate its ends, which would need to be provided with end caps. This is achieved by joining the pipe sections 21i (see Fig. 3) at an angle (or so-called deflected angle a) to form a closed circuit of pipes (21). This closed circuit of pipes can have approximately the shape of a ring, doughnut, an oval or racetrack, as illustrated in Fig. 2. This figure shows three joined pipe segments 11 or 21i formed into three rings arranged consecutively in a radial direction. Fig. 2 shows an implementation with three rings, however, the invention can be implemented with a single ring or any plurality of X rings. The greater the number of rings, the greater the surface area of the disc formed by the largest ring, and the greater the volume of compressed air the storage tank system can hold for the same type of pipe. The ring-shaped configuration of the structure eliminates the need for end caps, and consequently also avoids the use of concrete blocks 12 to reinforce these ends, where powerful pressure forces are concentrated. In this implementation, the pressure thrust is distributed over several joints, such as several angularly deflected joints. By selecting the angular deflection at the joints, a reduced pressure at each joint can be calculated in such a way that, from a sufficient burial depth and under certain soil conditions surrounding the pipe, the pressure force or thrust is distributed in such a way that it is no longer necessary to use concrete reinforcement such as thrust restraint or thrust blocks, or even a stone bed.

The following Tables 1 and 2 illustrate comparisons between implementations using parallel sections and implementations according to the present invention using a closed circuit of ring-shaped pipes.

Taking the example of a DN3500 pipe with a storage capacity of 300,000 m³ over a total pipe length of 33 km, eight different variants of the grid structure were studied, in which the sections are placed in parallel, as shown in Fig. 1. As shown in Table 1 below, the number of sections must be chosen to balance the number of concrete blocks Y with the length L of the area in which the storage tank is to be buried. Variant 1, with two parallel sections, requires the least number of concrete blocks at the ends of the pipe sections. However, this variant requires an area of over 16 km in length. Variant 8, with the same volume, can see its occupied territory reduced to less than 4 km in length, but with the major disadvantage of requiring the installation of 18 concrete backpressure blocks.

**Tabel 1**

| Variant | Number of sections, X | Number of thrust blocks, Y | Need territory length L, km |
|---|---|---|---|
| 1 | 2 | 4 | 16.5 |
| 2 | 3 | 6 | 11.0 |
| 3 | 4 | 8 | 8.3 |
| 4 | 5 | 10 | 6.6 |
| 5 | 6 | 12 | 5.5 |
| 6 | 7 | 14 | 4.7 |
| 7 | 8 | 16 | 4.1 |
| 8 | 9 | 18 | 3.7 |

In a similar way for the structure according to the inventive implementation of Fig. 2, using the parameters of the DIN3500 pipe with a volume of 300,000m³ , three variants can be studied. In these three variants, the use of counter-pressure concrete blocks or thrust blocks can be avoided. The space required by the storage tank system is also considerably reduced, since depending on the variant (from 3 to 5 sections), the length of land required for burial is between 3.5 and 2.2 km.

**Tabel 2**

| **Variant** | **Number of Sections** | **Number of thrust blocks** | **Need territory length, km** | **Angular deflection at joint** |
|---|---|---|---|---|
| 1 | 3 | 0 | 3.5 | 0.4 |
| 2 | 4 | 0 | 2.7 | 0.5 |
| 3 | 5 | 0 | 2.2 | 0.7 |

Traditionally, buried compressed air reservoirs have been built in steel. However, using steel in tubular reservoirs for compressed air storage, especially when placed in the soil, has several downsides. One of the concerns is corrosion, as steel is prone to corroding, particularly when buried in soil that can have varying moisture levels and chemical compositions. This corrosion can weaken the structural integrity of the reservoir, leading to potential failures. Further, regular maintenance and inspections can become necessary due to the risk of corrosion and other forms of degradation, increasing operational costs and downtime. Another potential issue is the susceptibility of steel to temperature changes, causing expansion and contraction. This is particularly concerning for underground storage where temperature fluctuations can be significant, leading to potential structural stress. Furthermore, steel is more expensive than composite solutions.

Furthermore, the weight of steel makes transportation and installation more challenging and expensive, particularly for large-scale storage systems. Even with maintenance, steel reservoirs have a limited lifespan due to inevitable wear and tear, which can be a significant drawback. In addition, when burying steel reservoirs, the suitability of the soil must be carefully considered. Factors like soil composition, stability, and potential ground movement can have more impact on the safety and longevity of the storage system if made of steel. Although steel is often chosen for its relative affordability, the long-term costs associated with maintenance, corrosion protection, and eventual replacement can accumulate. Moreover, in some soil types, there might be issues with permeability and seepage, which can affect the integrity and performance of the storage system. These factors collectively highlight the complexities and potential downsides of using steel in tubular reservoirs for compressed air storage, particularly when these reservoirs are placed in the soil.

Another issue is that in using steel, the diameter of the tube to be used for compressed air reservoir could be limited. In the use case of a CAES installation and considering the pressure of compressed air to reach, it is difficult to have a diameter of a tube in steel larger than 2,5 meters, thus limiting the volume stored in such an installation.

To overcome these issues, the present invention proposes using tube in a composite material, in particular using fiber glass or carbon fiber.

Fig. 3 illustrates a tube 21i with dimensions of length D, radius R, and thickness T . The tube can be slightly curved by an angle α to ease it joining to other tubes in order to obtain the curved closed structure discussed above. Using composite for this tube offers the possibility of combining the unique properties of composite materials to create a structure that is not only robust but also efficient and versatile. For instance, diameter of the tube (that is to say two times the radius R and the thickness T) can be greater than the 2,5 meters maximal when using steel. The diameter of the tube can be greater than 3,5 meters or even greater than 5,5 meters .

The primary materials used for the tube can be glass fiber reinforcements and a polymer matrix, such as thermoset polymer matric, typically polyester or an epoxy resin could be used. Glass fibers can be chosen for their exceptional tensile strength and rigidity, while the polymer matrix binds these fibers together, ensuring stress is appropriately transferred throughout the structure. In the construction of the tube, the fibers can be predominantly aligned in a circumferential (or hoop) direction to resist the hoop stress caused by the internal pressure. Indeed, in a design such as the doughnut design concept, the surrounding soil is resisting the majority of the longitudinal pressure loads, relaxing the longitudinal loads acting in the pipe.

The role of the polymer matrix in this composite is primarily filled by polyester or epoxy resin, chosen for its strong bonding capabilities, resistance to chemicals, and durability. This resin is a thermosetting polymer, which means it undergoes a curing process that involves heating, leading to a hardened, rigid matrix that securely encapsulates the glass fibers.

In terms of performance, the composite tube offers several advantages. Its high strength-to-weight ratio means it can withstand significant stress without adding excessive weight, an essential factor in many engineering applications. Its resistance to corrosion is another key benefit, especially in environments where exposure to moisture or chemicals is a concern. Furthermore, the composite material provides excellent thermal insulation, protecting the contents of the tube from external temperature variations.

## Claims

1. A Compressed Air Energy Storage, CAES, system comprising:
an air storage assembly (20) formed by one or more pipes (11) for storing compressed air, each being a tubular element (21i) comprising a composite material.

2. The CAES system of claim 1, comprising an air compression and release control mechanism.

3. The CAES system of any one of the preceding claims, comprising at least two pipes joint together.

4. The CAES system of claim 3, wherein the tubular elements (21i) are modular.

5. The CAE system of any one of the preceding claims, wherein the composite material include carbon fiber and/or glass fiber.

6. The CAES system of any one of the preceding claims, wherein the composite material comprise a resin matrix.

7. The CAES system of claim 6, wherein the resin matrix is a thermoset polymer matrix of polyester or epoxy.

8. The CAES system of any one of the claims 5 to 7, wherein the fibers are aligned in the circumferential direction of the tubular element (21i).

9. The CAES system of any one of the preceding claims, wherein the diameter (D) of the tubular element (21i) is greater than 3,5 meters.

10. The CAES system of any one of the preceding claims 3 to 9, where the tubular elements (21i) are joined with one or more angularly deflected joints with a deflection angle (α).

11. The CAES system of any one of the preceding claims, wherein the air storage assembly (20) has the form of a substantially closed loop or closed circuit (21).

12. The CAES system of claim 11, wherein the substantially closed loop or closed circuit (21) has substantially the shape of a ring, a donut, an oval or a race trail.

13. The CAES system of claim 11 or 12, wherein the air storage assembly (20) having the form of a substantially closed loop (21) comprises a plurality of concentric substantially closed loops.

14. The CAES system of any one of the preceding claims, wherein the air storage assembly (20) is buried in the ground.

15. The CAES system of any one of the preceding claims, wherein the CAES system is an adiabatic CAES system.
